(19) Europäisches Patentamt
European Patent Office
Office européen des brevets

(11) **EP 4 231 640 A1**

(12) **EUROPEAN PATENT APPLICATION**

(43) Date of publication:
**23.08.2023 Bulletin 2023/34**

(21) Application number: **22305169.9**

(22) Date of filing: **16.02.2022**

(51) International Patent Classification (IPC):
**H04N 19/119** (2014.01)    **H04N 19/176** (2014.01)
**H04N 19/46** (2014.01)    **H04N 19/70** (2014.01)

(52) Cooperative Patent Classification (CPC):
**H04N 19/119; H04N 19/176; H04N 19/46;
H04N 19/70**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventors:
- **LE LEANNEC, Fabrice**
  **35830 BETTON (FR)**
- **ANDRIVON, Pierre**
  **35340 LIFFRE (FR)**
- **THOMAS, Emmanuel**
  **Beijing (CN)**

(74) Representative: **RVDB Rennes**
**44 rue Lariboisière**
**35235 Thorigné-Fouillard (FR)**

(54) **ENCODING/DECODING VIDEO PICTURE DATA**

(57)    The present application relates to encoding/decoding a video picture into/from a bitstream of encoded video picture data, the video picture comprising at least one component of samples representative of pixel values of a screen. A method for encoding the video picture into the bitstream comprises obtaining (320), from a transparency map, a modified video picture by assigning specific values (SV) to samples of one component (C) associated with transparent pixels, said specific values (SV) are different of sample values of said component (C) associated with non-transparent pixels ; and encoding (330) the modified video picture into the bitstream.

Fig. 3

**Description**

<u>FIELD</u>

The present application generally relates to video picture encoding and decoding. Particularly, but not exclusively, the technical field of the present application is related to encoding/decoding of samples of a video picture associated with transparent and non-transparent pixel information into/from a bitstream.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

See-through display ("See-through display," *Wikipedia, The Free Encyclopedia,* https://en.wikipedia.org/w/index.php?title=See-through_display&oldid=1020482150, accessed August 30, 2021), generally refers to display technologies which allow the viewer to see both a video content being displayed on a screen as well as the physical objects behind the screen. It is thus a characteristic of those screens to be able to display an image while letting the light coming from behind the screen to traverse the screen and hit the viewer's eye.

Historically, the first versions of see-through display were using LCD display technology in the 2010s. However, LCD transparent screens merely filter the incoming light from behind the TV to illuminate the pixels which effectively means that those screens could not work in a dark room. This is one of the reasons why OLED-based see-through display quickly became a more promising approach since OLED screens support self-emitting pixels. That is, each pixel of an OLED screen contains its source of light. In a nutshell, an OLED-based see-through display is made of a regular OLED screen in which the manufacturer has punched a very large number of holes so that the light can traverse the screen from behind. Note that since the OLED screen emits light only in one direction, a viewer behind the screen would not be able to see the displayed content on the screen.

In terms of applications, those type of screens can equip glasses so that the user is able to see the world around and at the same time receive added information. Those applications fall in the Augmented Reality category. See-through displays can also be built into TV sets in which case they are usually called transparent screens or transparent TV. The first type of applications for those screens was for advertisement purposes in shops, trade shows, etc. This allowed to put on display products and be an eye-catcher for the customers.

More recently, TV manufacturers started shipping TV models to the mass market where the screen is a transparent screen.

Another type of see-through display falls in the category of head-mounted display. On those devices, the information on screen is overlaid on top of what the user sees but the overlaid information is not spatially aligned with the world around the user. As opposed to AR glasses which track the user's surrounding and display content on the glasses in such a way that it augments the world the user sees.

For both LCD and OLED-based transparent screens, the fact that the viewer can perceive the scene or parts of the scene behind the TV is determined by the value of the pixels. There are two extreme cases. The first one is when the user doesn't see at all what is behind the screen, i.e. total opacity. The second one is when the user fully sees what is behind the TV and no other image displayed on the screen, i.e. total transparency. In between those cases, there is a continuous spectrum of transparency level wherein the user sees the displayed picture on the screen overlayed on top of the scene behind the screen. All those cases, full opacity, full transparency and intermediate transparency can be for the entire screen or localised up to a granularity of a pixel for the best see-through display technology such as current OLED displays.

Depending on LCD or OLED technologies, each of the effects discussed above, i.e. full opacity, full transparency, and intermediate transparency, is realised in a different manner.

For LCDs, a pixel is black when as much light as possible coming from the light source is stopped. As a result, a dark pixel will not let the light from behind the screen traverse and will appear opaque for the viewer. Conversely, a pixel is white when all the light comes through all the sub colour pixels to form a white light beam. As a result, the light from behind may also traverse the pixel through the holes and thus the objects behind may be visible to the viewer, hence creating the transparency effect. It is not possible to display white pixels on transparent LCD screens.

On a transparent OLED, the black pixels (light turned off) let the light coming from behind passing through the screen. This effectively means that in this simple version of transparent OLED screen, it is not possible to display black pixels on transparent OLED screens.

There are OLED TV models wherein an additional layer is placed right behind the screen. This additional layer is responsible for dimming the light coming from behind. The purpose of this dimming layer is to improve OLED-based transparent screen in such a way that dark pixels can also be made opaque by activating this layer. Another use of this layer is to switch between a conventional opaque TV to a transparent TV mode. There can be indeed cases where the content is not made for transparent screens and leads to a bad user experience in which case it is advantageous for the user to be able to switch to a conventional opaque TV mode. As of today, it seems that it is possible to activate this dimming layer at different levels of dimming intensity but only for the whole screen at once. That is, the dimming layer doesn't seem to be yet able to be localised to some regions/pixels of the screen. However, this feature can be anticipated in future commercialised versions.

From the content creator perspective, there are multiple types of screens to support when making content, namely conventional (opaque) screens, LCD transparent screens and OLED transparent screens. Creating a video signal for those 3 categories means to produce 3 different video signals, one for conventional screens, one for transparent screens with clear pixel as white pixel (e.g. LCD) and one for transparent screens with clear pixel as black pixel (e.g. OLED). This causes higher production cost, higher storage cost in the distribution chain (e.g. in Content Delivery Network (CDN) where the video content is duplicated in 3 variants), higher network usage since the content, being different, cannot be cached between conventional and transparent screens and computational cost for encoding the video signals.

The problem to be solved is to produce, compress and transmit a single video signal that may commonly be used by any type of transparent screens to render the video content in a way that conforms to the content creator intent.

The international patent application WO2105618CN proposes to signal a transparency mask associated to encoded video picture(s), under the form of some signalled metadata. This metadata may take the form, for instance, of a binary or integer values mask indicating a transparency value of each pixel of a screen. Typically, a binary mask value 0 may refer to a transparent pixel and a binary mask value 1 may refer to an opaque pixel.

One of the drawbacks of using a binary or integer mask for signalling pixels transparency is the increase of the rate cost associated to the signalling of said mask, which may represent a very significant overhead on the bitstream of encoded video picture data. Basically, non-compressed or lossless coding is used for encoding the mask leading to a 1bit/pixel rate extra cost added to the bitstream bitrate.

In the US patent 10,204,596, a method is presented to display a picture on a transparent screen wherein the picture is processed to adjust the transparency and opacity aspects of the picture data when displayed on the screen. A transparency display controller modifies the picture data based on either an user input (e.g. the user would draw region in the displayed picture around opaque pixels), or based on automatic determination (e.g. area detected to be static are set to opaque, those detected as dynamic are set to transparent), or based on a binary mask transmitted by the display controller to indicate the background and foreground regions in the picture, which is used to define transparency and opacity of the pixels in those regions (e.g. static is opaque and dynamic transparent).

One of drawbacks of this prior art occurs when the binary mask is used because every device receiving a same picture must execute the same process to determine the binary mask since it is not received by the device. Another drawback is the definition of opaque and transparent regions that can be highly changing between different devices having different algorithms. Another drawback is that the definition of opaque and transparent regions may very likely not respect the content creator intent. Moreover, the mask merely expresses background and foreground regions which leaves the transparency adjustment process ambiguous in terms of which regions is transparent or opaque. It is implied that the picture is first analysed which introduces delay in the rendering pipeline. When video is transmitted and the analysis is performed on multiple video pictures (which is typical for background/foreground detection), this incurs a much larger delay in display. Also, the algorithm needs to be running on real time which means up to 60 frames per second analysed for regular transmitted video streams. Frame rate may even go higher up to 120 frames per second for Ultra HD HFR content.

At least one exemplary embodiment of the present application has been devised with the foregoing in mind.

## SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method for encoding a video picture into a bitstream of encoded video picture data, the video picture comprising at least one component of samples representative of pixel values of a screen. The method comprises obtaining, from a transparency map, a modified video picture by assigning specific values to samples of one component associated with transparent pixels, said specific values are different of sample values of said component associated with non-transparent pixels ; and encoding the modified video picture.

According to a second aspect of the present application, there is provided a method for decoding a video picture from a bitstream of encoded video picture data, the video picture comprising at least one component of samples representative of pixel values of a screen. The method comprises obtaining decoded video picture data representative of samples associated with pixels by decoding the bitstream of encoded video picture data; and when a sample of one component associated with a pixel equals to a specific value, adjusting each sample of each component associated with said pixel based on transparency information data.

In one exemplary embodiment, when the video picture is represented in a limited range of values, specific values are outside said limited range of values.

In one exemplary embodiment, a foot-room and/or a headroom of the limited range of values is used to indicate at least one of the following information: a transparency pixel presence data; a transparency value upper bound of a sub-interval of sample values associated with transparent pixels; a transparency value lower bound of a sub-interval of sample values associated with transparent pixels; at least one sub-interval of samples values used to signal information relative to transparent pixels; intervals of values used to indicate entries of a transparency look-up table ; a transparency level;

In one exemplary embodiment, a specific sample is obtained by modifying at least one last significant bit of a value of a sample associated with a transparent pixel.

In one exemplary embodiment, a specific value assigned to a sample associated with a transparent pixel has a given parity, said specific value being obtained from the value of said sample.

In one exemplary embodiment, the method further comprises signaling into the bitstream transparency information data indicating a meaning of the specific values assigned to samples of one component of either the modified video picture or the decoded video picture.

In one exemplary embodiment, the transparency information data indicates at least one of the following information: a presence of at least one transparent pixel in a video picture or in a video; a transparency value upper bound of a sub-interval of sample values associated with transparent pixels; a transparency value lower bound of a sub-interval of sample values associated with transparent pixels; at least one sub-interval of samples values used to signal information relative to transparent pixels; intervals of values used to indicate entries of a transparency look-up table ; a transparency level.

In one exemplary embodiment, the video picture is partitioned to maximize a number of blocks of samples associated with only either transparent pixels or only non-transparent pixels.

In one exemplary embodiment, a same specific value is assigned to all samples of all blocks of samples associated with transparent pixels.

According to a third aspect of the present application, there is provided a bitstream of video picture data generated by one of the method according to the first aspect of the present application.

According to a fourth aspect of the present application, there is provided an apparatus of encoding a video picture into a bitstream of encoded video picture data. The apparatus comprises means for performing one of the method according to the first aspect of the present application.

According to a fifth aspect of the present application, there is provided an apparatus of decoding a video picture from a bitstream of encoded video picture data. The apparatus comprises for performing one of the method according to the second aspect of the present application.

According to a sixth aspect of the present application, there is provided a computer program product including instructions which, when the program is executed by one or more processors, causes the one or more processors to carry out a method according to the first aspect of the present application.

According to a seventh aspect of the present application, there is provided a non-transitory storage medium carrying instructions of program code for executing a method according to the first aspect of the present application.

According to an eighth aspect of the present application, there is provided a computer program product including instructions which, when the program is executed by one or more processors, causes the one or more processors to carry out a method according to the second aspect of the present application.

According to a nineth aspect of the present application, there is provided a non-transitory storage medium carrying instructions of program code for executing a method according to the second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows a schematic block diagram of steps of a method 100 of encoding a video picture VP in accordance with prior art;

**Figure 2** shows a schematic block diagram of steps of a method 200 of decoding a video picture VP in accordance with prior art;

**Figure 3** shows a schematic block diagram of steps of a method 300 of encoding a video picture into a bitstream in accordance with one exemplary embodiment;

**Figure 4** shows a schematic block diagram of steps of a method 400 of decoding a video picture from a bitstream in accordance with one exemplary embodiment;

**Figure 5** shows an example of definition of sub-intervals of a limited range of values $[0,2^{bitDepth} - 1]$ used for representing a video signal in accordance with at least one exemplary embodiment;

**Figure 6** shows a schematic block diagram of steps of a method 500 for selecting a best prediction mode in accordance with one variant of the first exemplary embodiment of method 300;

**Figure 7** shows an example of partitioning of a video picture in accordance with at least one exemplary embodiment;

**Figure 8** shows a general syntax of a NAL unit in accordance with prior art;

**Figure 9** shows a syntax element for signaling transparency information data in accordance with an exemplary embodiment;

**Figure 10** shows a syntax element for signaling transparency information data in accordance with an exemplary embodiment;

**Figure 11** shows a syntax element for signaling transparency information data in accordance with an exemplary embodiment;

**Figure 12** shows a syntax element for signaling transparency information data in accordance with an exemplary embodiment;

**Figure 13** shows a syntax element for signaling transparency information data in accordance with an exemplary embodiment;

**Figure 14** shows an example of usage of the syntax element of **Figure 13** for signaling transparency information data;

**Figure 15** shows a syntax element for signaling transparency information data in accordance with an exemplary embodiment;

**Figure 16** shows an example of usage of the syntax element of **Figure 15** for signaling transparency information data;

**Figure 17** shows an example of usage of the syntax element of **Figure 15** for signaling transparency information data; and

**Figure 18** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

A pixel corresponds to the smallest display unit on a screen, which can be composed of one or more sources of light (1 for monochrome screen or 3 or more for colour screens).

A video picture, also denoted frame or picture frame, comprises at least one component determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture comprises a same number of samples which equals to a number of pixels of a screen on which the video picture is intended to be display.

Alternatively, in the case of a video format comprise a luma component and two chroma component like the (Y,Cb,Cr) format, dependent on the color format considered, the chroma component may contained half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set samples of one component of the video picture. A block of at least one luma sample or a block of at least one chroma sample may be considered when the picture/video format is the well-known (Y,Cb,Cr) format, or a block of at least one color sample when the picture/video format is the well-known (R, G, B) format.

The at least one exemplar embodiment is not limited to a particular picture/video format.

Generally speaking, the present application relates to compress a video picture with a standard video codec, in a way pixels of a screen intended to be transparent have specific properties in their decoded values and to signal transparency metadata to identify transparent pixels in the de-compressed video picture.

The main advantage is to get a reduced rate cost associated with the signalling of transparency metadata indicating the pixels' transparency while keeping the identification of transparent pixels in the video picture as simple as possible for the device.

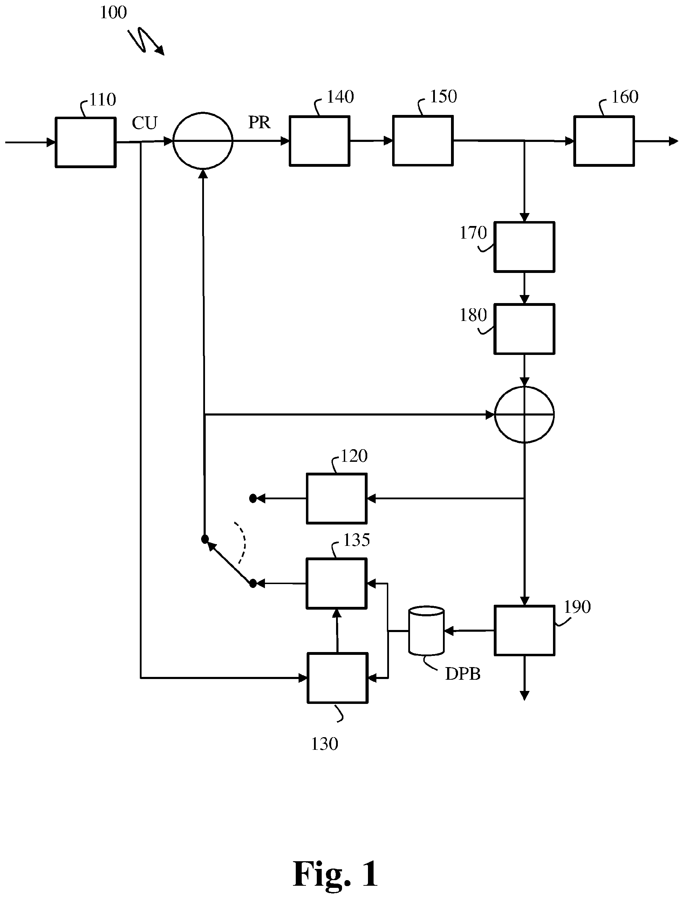

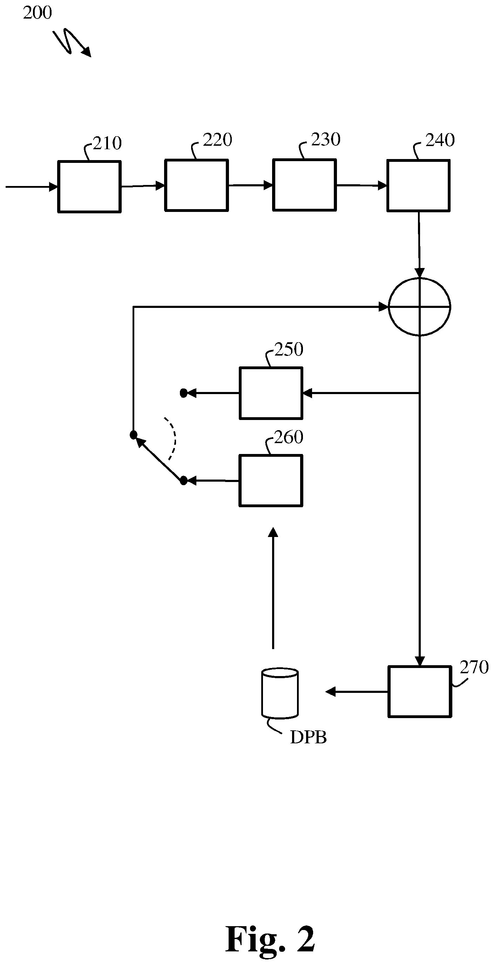

**Figures 1** and **2** provides an overview of video encoding/decoding methods used in current video standard compression systems like VVC for example.

**Figure 1** shows a schematic block diagram of steps of a method 100 of encoding a video picture VP in accordance with prior art.

In step 110, a video picture VP is partitioned into blocks of samples and partitioning information data is signaled into a bitstream.

For example, in an HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples (CU), in short a block, is then encoded using either an intra or inter prediction coding mode.

Intra prediction (step 120) consists in predicting a current block by means of a predicted block based on already encoded, decoded and reconstructed samples located around the current block, typically on the top and on the left of the current block. Intra prediction is performed in the spatial domain.

In inter prediction mode, motion estimation (step 130) and motion compensation (135) are performed. Motion estimation searches, in one or more reference video picture(s) used to predictively encode the current video picture, a candidate reference block that is a good predictor of the current block. For instance, a good predictor of the current block is a predictor which is similar to the current block. The output of the motion estimation step 130 is one or more motion vectors and reference picture index (or indices) associated to the current block. Next, motion compensation (step 135) obtains a predicted block by means of the motion vector(s) and reference picture index (indices) determined by the motion estimation step 130. Basically, the block belonging to a selected reference picture and pointed to by a motion vector may be used as the predicted block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the predicted block samples.

Prediction information data is signaled in the bitstream. The prediction information may comprise a prediction mode, prediction information coding mode, intra prediction mode or motions vector(s) and reference picture index (or indices) and any other information used for obtaining a same predicted block at the decoding side.

The method 100 selects one of the intra mode or inter coding mode by optimizing a rate-distortion trade-off considering the encoding of a prediction residual block calculated, for example, by subtracting a candidate predicted block from the current block, and the signaling of prediction information data required for determining said candidate predicted block at the decoding side.

Usually, the best prediction mode is given as being the prediction mode of a best coding mode p* for a current block given by:

$$p^* = \underset{p \in P}{\mathrm{Argmin}}\{RD_{cost}(p)\} \quad (1)$$

where $P$ is the set of all candidate coding modes for the current block, $p$ represents a candidate coding mode in that set, $RD_{cost}(p)$ is a rate-distortion cost of candidate coding mode $p$, typically expressed as:

$$RD_{cost(p)} = D(p) + \lambda . R(p) .$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best predicted block from the current block. The prediction residual block PR is then transformed (step 140) by using, for example, a DCT (discrete cosine transform) or DST (Discrete Sinus transform) type transform, and the obtained transformed coefficient block is quantized (step 150).

In variant, the method 100 may also skip the transform step 140 and apply quantization directly to the prediction residual block PR, according to the so-called transform-skip coding mode.

Quantized transform coefficient block (or quantized prediction residual block) is entropy encoded into the bitstream.

Next, the quantized transform coefficient block (or the quantized residual block) is de-quantized (step 170) and inverse transformed (180) (or not), leading to a decoded prediction residual block. The decoded prediction residual block and the predicted block are then combined, typically summed, which provides the reconstructed block.

Other information data may also be entropy encoded for encoding a current block of the video picture VP.

In-loop filters (step 190) may be applied to a reconstructed picture (comprising reconstructed blocks) to reduce compression artefacts. Loop filter may apply after all picture blocks are reconstructed. For instance, they consist in deblocking filter, Sample Adaptive Offset (SAO) or adaptive loop filter.

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 2** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream.

Other information data may also be entropy decoded for decoding a current block of the video picture VP.

In step 220, a reconstructed picture is divided into current blocks based on the partitioning information. Each current block is entropy decoded from the bitstream. Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A predicted block is obtained through its intra prediction (step 250) or its motion-compensated temporal prediction (step 260). The prediction process performed at the decoding side is identical to that of the encoding side.

Next, the decoded prediction residual block and the predicted block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed (**Figure 1**).

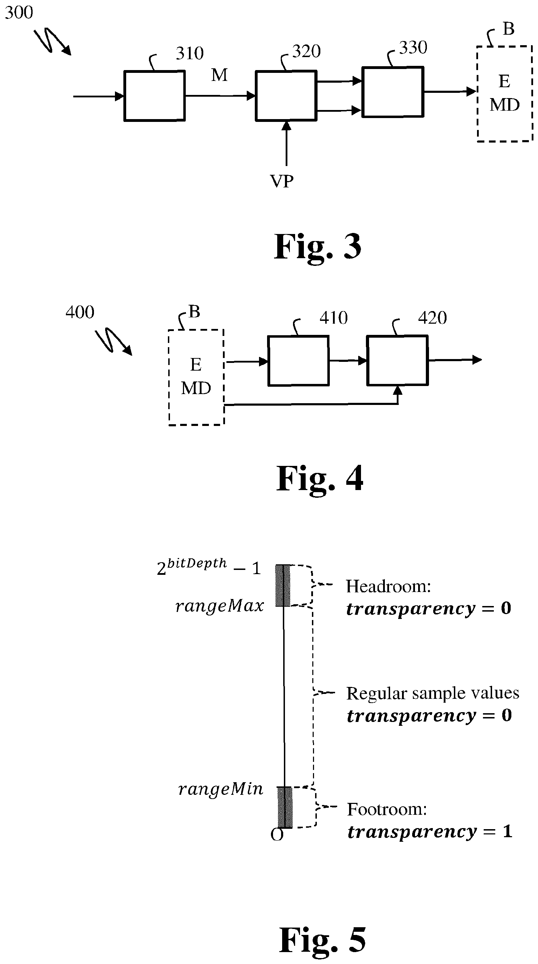

**Figure 3** shows a schematic block diagram of steps of a method 300 of encoding a video picture VP into a bitstream B in accordance with at one exemplary embodiment.

The video picture VP is composed of at least one sample representative of pixel values of a display unit.

In step 310, a transparency map M is associated with at least one pixel of the display unit.

The transparency map determines the transparency of each pixel, i.e. indicates if each pixel is transparent or not.

In variant, the transparency map M may also indicate a transparency level for each pixel, or equivalently an opacity level.

A transparent pixel is a pixel associated with either a binary information of the transparency map M indicating the pixel is transparent or a non-binary information indicating a non-null transparency level or a non-null opacity level.

In step 320, a modified video picture is obtained from the transparency map M, by assigning specific values SV to samples of one component C associated with transparent pixels, said specific values SV are different from sample values of said component C associated with non-transparent pixels.

Assigning specific values SV to samples of one component associated with transparency pixels is a mean to embed transparency pixel presence data in the video picture itself.

In step 330, the modified video picture is encoded into the bitstream B, by the method 100.

**Figure 4** shows a schematic block diagram of steps of a method 400 of decoding a video picture VP from a bitstream B in accordance with at least one exemplary embodiment.

In step 410, decoded video picture data representative of samples associated with pixels of a screen is obtained by decoding the bitstream B of encoded video picture data by the method 200.

In step 420, when a sample of one component C associated with a pixel of a screen equals to a specific value SV, each sample of each component associated with said pixel is adjusted based on transparency information data.

In one first exemplary embodiment of the methods 300 and 400, when the video picture is represented in a limited (standardized, legal) range of values, specific values SV may be values outside the limited range of values. Thus, decoded sample values which correspond to samples to be encoded having their values outside the limited range of values, remain outside of the limited range of values and those which have values inside the limited range of values remain inside the limited range of values.

A representation of a video picture in a limited range of values may be signaled in the bitstream B, for example, by a binary data equals to 0. For example, the binary value may be signaled by the syntax element **VideoFullRangeFlag** of specification H.273 (Coding-independent code points for video signal type identification", Recommendation ITU-T H.273, SERIES H: AUDIOVISUAL AND MULTIMEDIA SYSTEMS Infrastructure of audiovisual services - Coding of moving video, TELECOMMUNICATION STANDARDIZATION SECTOR OF ITU, July 2021).

It is known, for such limited range video signal, that luma sample values are contained in a sub-interval of the full interval covered by the signal representation with a given bit-depth, that is $[0,2^{bitDepth} - 1]$. For example, if the video bit-depth is 8 bits and the video signal is of limited range type, then all sample values are contained in the sub-interval [16,235] for luma and [16, 240] for chroma (Recommendation ITU-R BT.709-6 (06/2015), "Parameter values for the HDTV standards for production and international program exchange", Radiocommunication Sector of International Telecommunication Union (ITU-R), while an 8-bit sample would theoretically allow the usage of the entire [0,255] range. Historically, the presence of footroom sample below 16 for luma an chroma components) and headroom (sample above 240 for luma) in video signal is associated to synchronization of the video pictures notably related to the use of analogic/CRT displays technology. In the same way, Recommendation BT.709 states that in video signal represented with 10-bit values, luma samples values are contained in a sub-interval [64; 940] for luma (or R, G, B) and in the sub-interval [64;960] for chroma.

Moreover, standard video compression systems like VVC do not consider the limited range type of the video signal being compressed and de-compressed.

Hence, samples values out of this limited range can well be compressed and de-compressed with a standard codec and can be given some specific meaning for a given video transmission application.

**Figure 5** shows an example of definition of sub-intervals of a limited range of values [0,2^{bitDepth} - 1] used for representing a video signal in accordance with at least one exemplary embodiment.

As can be seen, the limited range [*RangeMin* ; *RangeMax*] is reserved to represent regular sample values of a video picture, and specific values SV in some sub-interval out of this limited range are given to samples corresponding to transparent pixels. For example, specific values SV belong to the footroom, i.e. in the sub-interval [*0*; *RangeMin-1*].

Considering an 8-bit video picture VP of limited range type, luma sample below 16 are not representative of a picture element, according to BT. 709 specification for example. Therefore, in this case, non-transparent pixels have necessarily luma sample at least equal to 16 when the specific values SV belong of the footroom. However, some standard specification such as VVC does not prevent the codec from coding samples below that upper bound (16) of the footroom. Thus, for example, in the method 300 or 400, specific samples SV below the upper bound of the footroom may be assigned to luma samples associated with transparent pixels when rendering the decoded picture on a transparent screen. For example, the specific samples SV equal to a same value 0.

Considering an 8-bit video picture VP of limited range type, luma sample above 235 are not representative of a picture element, according to BT. 709 specification for example. Therefore, in this case, non-transparent pixels have necessarily luma sample at most equal to 235 when the specific values SV belong of the headroom. However, some standard specification such as VVC does not prevent the codec from coding samples above that lower bound (235) of the headroom. Thus, for example, in the method 300 or 400, specific values SV above the lower bound of the headroom are assigned to luma samples associated with transparent pixels when rendering the decoded picture on a transparent screen. For example, the specific sample SV equal a same value 255.

Considering, for example, footroom and luma sample to embed transparent pixel presence data in the encoded video picture data written in the bitstream B, in step 310, a specific value 0 may be assigned to each luma sample associated with transparent pixels. Next, the encoding method 100 applies in which luma samples with value 0 must have their decoded values out of the limited range [*rangeMin,rangeMax*] of the video picture VP, i.e. in interval *[0, rangeMin - 1]*, and regular luma samples with values inside the sub-interval *[rangeMin, rangeMax]* shall have their decoded values inside the sub-interval *[rangeMin, rangeMax]*.

In step 410, decoded video picture is decoded in accordance with the method 200. In step 420, when a decoded luma sample associated with a pixel equals a specific sample SV, said decoded luma and chroma samples are associated with a transparent pixel. The luma and chroma samples associated with transparent pixels are then adjusted based on transmission information data. That is, identified transparent pixels are given the pixel values corresponding to transparent pixels on the screen.

In case, a client video application cannot obtain transparency information data, step 420 is bypassed. Possibly a value of *RangeMin* is assigned to the decoded samples represented belonging to the range [0, *RangeMin* - 1].

A same coded video bitstream can be used for various types of transparent screens thanks to the transmission of information data responsive to targeted transparent screen.

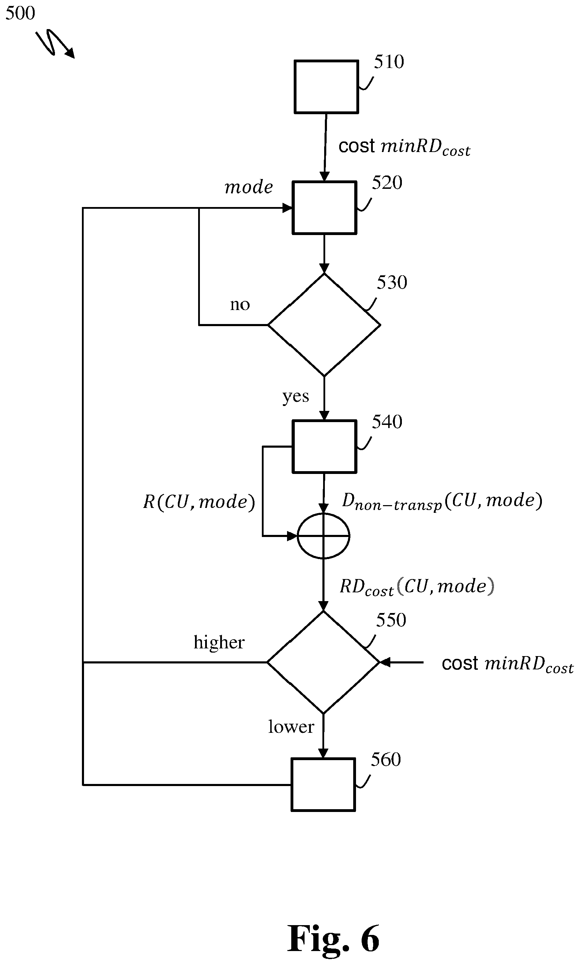

In variant of the first exemplary embodiment of the method 300, illustrated on **Figure 6,** the rate-distortion of equation (1) may be minimized to ensure the values sample of the current block respectively outside a limited range and inside this range remain respectively outside and inside this limited range in their decoded and reconstructed forms.

Therefore, equation (1) is replaced by equation (2):

$$p^* = \underset{\substack{p \in P \\ \text{transparency sub-map preserved}}}{\text{Argmin}} \{RD_{cost}(p)\} \quad (2)$$

In other words, the coding mode with minimal cost, and which ensures all sample values of the video picture VP outside the limited range *[rangeMin, rangeMax]* remains outside this limited range once reconstructed based on decoded video picture data, and sample values of the video picture VP inside the limited range *[rangeMin, rangeMax]* remain inside the limited range once reconstructed based on decoded video picture data, is selected.

In step 510 of a method 500 of **Figure 6,** a minimum rate-distortion cost *minRD_{cost}* for a current block to be encoded is initialized to very high value, for example +∞. For each candidate prediction mode *mode,* in step 520, the current block is encoded with this prediction mode and a reconstructed block is obtained from a decoded block as discussed above. In step 530, a test checks if the transparency pixel presence data embedded in samples of the current block is preserved in the reconstructed block. If not, the candidate prediction mode *mode* is not considered as a valid candidate, and the loop iterates on next candidate prediction mode. If yes, in step 540, associated distortion $D_{non-transp}(CU,mode)$ and rate $R(CU,mode)$ are computed (CU refers to the current block). In particular, the distortion $D_{non-transp}(CU,mode)$ is computed only on samples associated with non-transparent pixels. In step 550, the resulting rate-distortion cost $RD_{cost}(CU,mode)= D_{non-transp}(CU,mode) + \lambda R(CU,mode)$ is then compared to the minimum cost $minRD_{cost}$ found so far. If not lower, the loop iterates to next candidate prediction mode. If lower, in step 560, the minimum cost takes the value of current RD cost, and the best prediction mode found so far is set equal to the current candidate prediction mode. Next, the loop iterates on next candidate prediction modes until all candidate prediction mode have been considered.

This variant ensures that decoded values of samples to be encoded which are outside the limited range of values, remain outside of the limited range and those which are inside the limited range remain inside the limited range.

Most of today's video content bit-depth is 8-bit, while modern video codecs like VVC typically work with 10-bit as internal bit-depth representation of processed data (also known as Internal Bit Depth Increase or IBDI which allows to encode with a precision greater than the precision of a video content as MPEG codec have a higher internal precision). As a results, reconstructed video picture samples are obtained with 10-bit accuracy, before being possibly down-converted to 8-bit for the sake of rendering.

In one second exemplary embodiment of the methods 300 and 400, a specific sample SV may be obtained by modifying at least one last significant bit (LSB) of a value of a sample associated with a transparent pixel.

For example, the LSB of a value of a sample associated with a transparent pixel may be used to represent the transparency pixel presence data.

For example, the two last significant bits of a 10-bit encoded sample may be used to represent both the transparency pixel presence data and a transparency level.

For example, at least one LSB of a luma sample may be used for transparency data, preserving thus the original colors of a video picture VP.

As for illustrative purpose, assume an 8-bit video picture VP linearly mapped to 10-bit limited range (e.g. [0, 255] to [64, 940] for luma and [0, 255] to [64, 960] for chroma or as another example from [16, 235] to [4, 1019] for luma and [16, 240] to [4, 1019] for chroma).

LSBs of the 10-bit video picture may be reserved for transparency level (e.g. in case of 10-bit - 8-bit = 2 LSB at least left, there are up to $2^2 = 4$ transparency levels available in LSBs i.e. 8 transparency levels total. The LSBs can be used in combination with the headroom and /or footroom sub-intervals according to the range used by video picture data. These transparency levels are set by the content creator possibly as a look up table. A limited range (e.g. [64, 940] luma range and [64, 960] chroma range) is coded by the 10-bit video coder.

On the 10-bit decoder-side, transparency pixel presence data (and possibly transparency level) is extracted from identified LSBs and/or identified headroom/footroom ranges and used to recreate a full size transparency map with pixelwise precision. Possibly, the transparency level is indicated for luma only or luma and chroma channels (or R, G, B channels, etc...).

In one third exemplary embodiment of the methods 300 and 400, a specific value assigned to a sample associated with a transparent pixel may have a given parity (odd or even).

When an original value of a sample (sample value of a component of the video picture VP) associated with a transparent pixel does not have the given parity, a specific value having the given parity is assigned to said sample, said specific value being obtained from the sample value.

The third exemplary embodiment avoids reserving specific value SV or ranges of values to represent the transparency pixel presence data.

In practice, in step 320, the method 100 outputs sample values with the given parity when the samples are associated with transparent pixels and sample values with the other parity otherwise.

This requires a looped two passes encoding where during the first pass the sample values are regularly encoded and then according to whether a reconstructed sample value does not exhibit the given parity the sample value is offset (e.g. by 1 or 2 or 3...) so as to get a reconstructed sample value with the given parity. Possibly, one specific value SV is reserved (e.g. 0 or 255 or 1023...) to act upon parity.

In variant, at least one LSB of a sample may represent a transparency level as discussed above.

Preferably, the chroma sample parity is used to encode the transparency pixel presence data as human eye is less sensitive to color than luminance.

However, this may depend on the required transparency granularity level especially for non-4:4:4 video signals where chroma channels are eventually up-sampled prior to displaying.

Possibly, a transformed coefficient (in the core coding transform process) parity may be used rather than the sample value per se.

The main advantage of having a method running in the sample domain is that it enables backward compatibility with legacy decoders.

In variant of the first, second and third exemplary embodiments of the method 300, illustrated on **Figure 6,** a same specific value SV may be assigned to all samples of all blocks of the video picture VP associated with transparent pixels (step 320).

In variant, the transform step 140 of method 100 may be skipped and quantization may be directly applied to prediction residual block PR by using a dedicated quantization parameter.

This last variant leads to a very simple codec.

In addition, through the choice of an ad-hoc quantization parameter, i.e. corresponding to a sufficiently small quantization step, it is easy to ensure all samples equals to a same specific value to remain below (or above) an upper bound (a lower bound) of a limited range after encoding and reconstructing based on decoded video picture data.

Also, once a current block of samples associated with transparent pixels is encoded, blocks that follow whose samples are also associated with transparent pixels can be easily encoded through intra prediction from the already encoded transparent block and zero residual block coding, which is very efficient in terms of compression performance.

In variant of the first, second and third exemplary embodiments of the method 300, in step 110 of the method 100, the video picture VP may be partitioned to maximize the number of blocks of samples (CU) associated with only either transparent pixels or only non-transparent pixels.

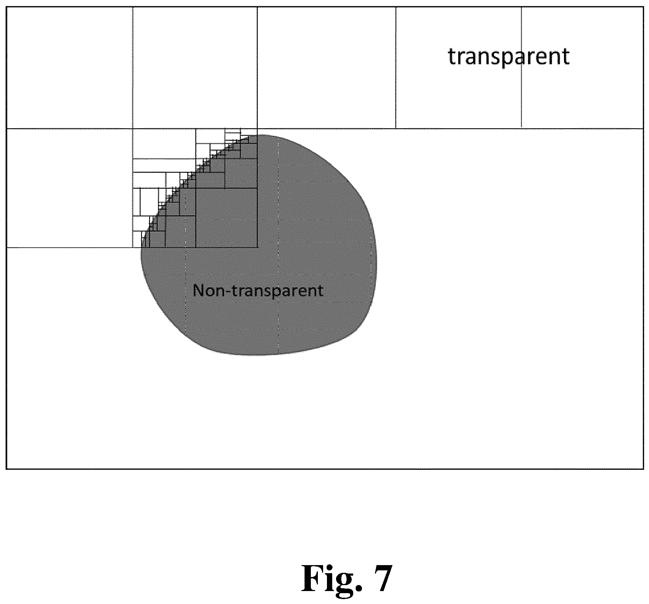

On **Figure 7,** large blocks of samples associated with transparent pixels and large block of samples associated with non-transparent blocks are obtained. The blocks of samples associated with transparent pixels may be efficiently encoded as above discussed by using the transform skip mode and the blocks of samples associated with non-transparent pixels may be encoded by using the usual method 100. For blocks of samples associated with both non-transparent pixels and transparent pixels, the transform skip mode (step 140 of method 100) may also be used with a quantization step 150 of method 100 sufficiently small so that values (luma sample values for example) of samples associated with transparent and non-transparent pixels remain in their respective dedicated intervals as above discussed.

This variant improves the compression performance.

In one exemplary embodiment of the method 300 and 400, the video picture VP may comprise one luma component Y and two chroma components Cb and Cr. Specific values may be assigned to values of luma samples associated with transparent pixels.

In one exemplary embodiment of the method 300 and 400, transparency information data may be signalled in the bitstream B. Transparency information data indicates a meaning of the specific values SV assigned to samples of one component of either the modified video picture or the decoded video picture.

This is advantageous, for example, for a client application that would have to understand how the transparency is encoded into the bitstream of encoded video picture data. Such a client application can then establish links between samples of a decoded video picture and transparency pixels to display on a screen.

Signalling transparency information data in the bitstream B means the method 300 comprises embedding transparency information data into at least one syntax element of the bitstream B and the method 400 comprises parsing at least one syntax element of the bitstream B to retrieve the transparency information data.

For example, the transport of the transparency information data may be based on the NAL-based video codec standards which are currently in H.264/AVC, H.265/HEVC, EVC and H.266/VVC. But similar signalling could be achieved for other coding standards such as AV1 or the upcoming AV2 standard.

Basically, a Network Abstraction Layer (NAL) unit is an encapsulation method for a video bitstream. A NAL unit is composed of a header and a payload. The concept of NAL unit is identical for those 4 standards although the definition of the NAL header may vary slightly between H.264/AVC, H.265/HEVC, EVC and H.266/VVC.

For the remaining description relative to signalling the transparency information data, the signalling takes the H.266/VVC standard as a basis for illustration purposes. More specifically, the metadata MD of **Figure 3** and **Figure 4** is described according to exemplary embodiments. The purpose of this metadata is to indicate the meaning of specific sample values SV contained in decoded video pictures VP, in order to allow the client application recovering the transparency map generated by the content creator.

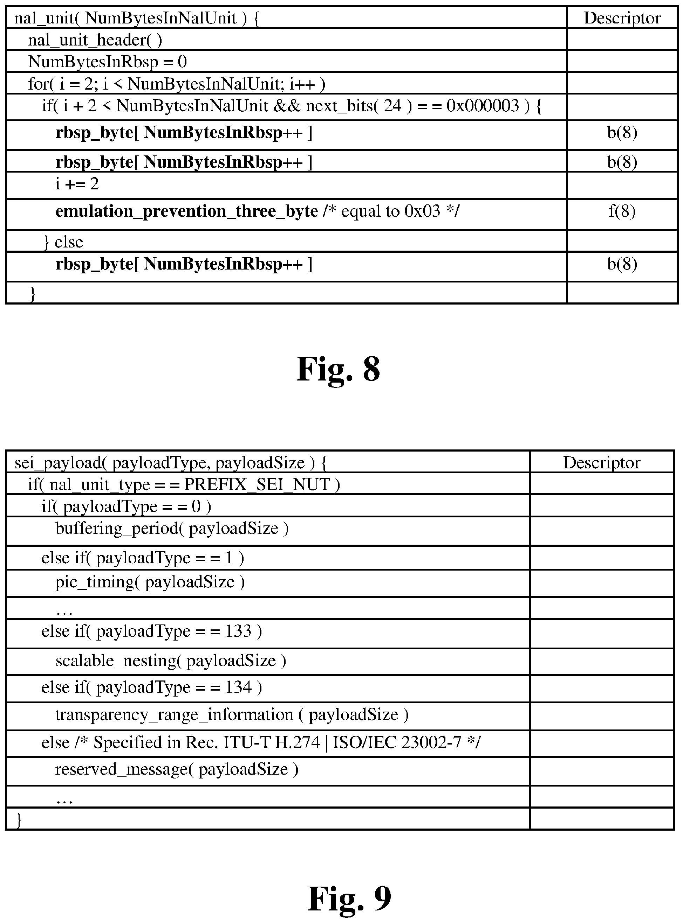

**Figure 8** shows a table representative of the general syntax of a NAL unit as defined in H.266/VVC. The formatting of the table follows the conventions defined in H.266/VVC. Please refer to section 7.1 entitled "Method of specifying syntax in tabular form" and section 7.2 entitled "Specification of syntax functions and descriptors" in H.266/VVC specification for more details on semantics of the syntax elements.

In variant, transparency information data is signalled in a SEI message (Supplementary Enhancement Information).

The SEI message type defines a syntax of a payload as well as a semantic of the carried data so that an implementer can make use of the signalled SEI message if he wants to support it. The SEI message is carried in the bitstream B as a NAL unit and the type of the SEI message is expressed by a payload type. In H.266/VVC, the payload types are defined in section D.2.1 entitled "General SEI payload syntax". For signalling the transparency information data, a particular payload type, e.g. denoted '134', may be defined by a syntax element denoted, for example, **transparency_range_information (payloadsize)** as shown in the table of **Figure 9.**

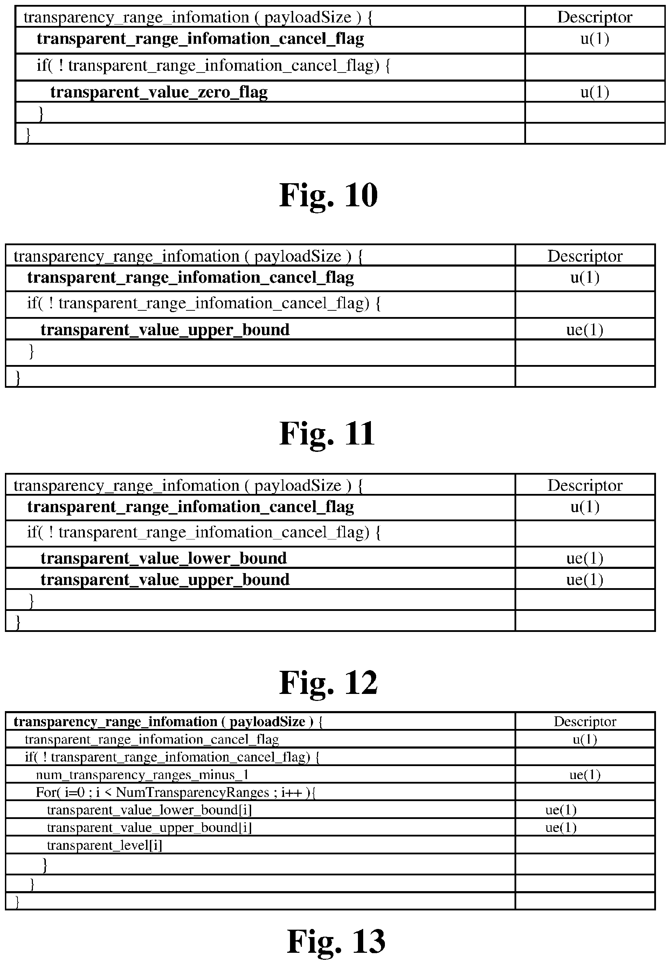

In one exemplary embodiment, illustrated on **Figure 10,** the transparency information data may be a binary syntax element, denoted **transparent_value_zero_flag** that is signalled, for example, in the syntax element **transparency_range_information (payloadsize).**

This is simplest exemplary embodiment for signalling the transparency pixel presence data of the first or second embodiment of methods 300 and 400 that assumes either the footroom or headroom of a video picture VP of limited range type is used to indicate transparent pixels.

The binary syntax element **transparent_value_zero_flag** is set to a first value (e.g. 0) to indicate that if the decoded video picture VP (or the video) contains a sample of a component with value 0, then it means the corresponding pixels is intended to be a transparent pixel. This way, almost the full range of the video picture VP can be used by the video regular content, e.g. [1 - 255] for 8-bit video picture VP of limited range type in case a specific value SV equals 0.

In one exemplary embodiment, illustrated on **Figure 11**, the transparency information data may be an upper bound of a sub-interval signalled, for example, in the syntax element **transparency_range_information (payloadsize).** Samples belonging to the sub-interval are associated with transparent pixels. The upper bound of the sub-interval may be at most equal to (*RangeMin* - 1) of a particular sample of the video picture VP. For example, the upper bound may equal to 15 for 8-bit video picture VP of limited range type when luma sample is the transparency pixel presence data embedded in the footroom. This exemplary embodiment may be used for signalling the transparency information data of the first or second exemplary embodiment of the methods 300 and 400.

In one exemplary embodiment, illustrated on **Figure 12,** the transparency information data may be an upper bound and a lower bound of a sub-interval of particular sample signalled, for example in the syntax element **transparency_range_information (payloadsize).** Samples belonging to the sub-interval are associated with transparent pixels. This exemplary embodiment may be used for signalling the transparency information data of the first or second exemplary embodiment of the methods 300 and 400.

In one exemplary embodiment, illustrated on **Figure 13**, the transparency information data may be an upper bound and a lower bound of a sub-interval and a transparency level are signalled, for example in the syntax element **transparency_range_information (payloadsize).** Samples belonging to the sub-interval are associated with transparent pixels and the transparency level indicates a transparency value to be used to adjust transparent pixels. This exemplary embodiment may be used for signalling the transparency information data of the first or second exemplary embodiment of the methods 300 and 400.

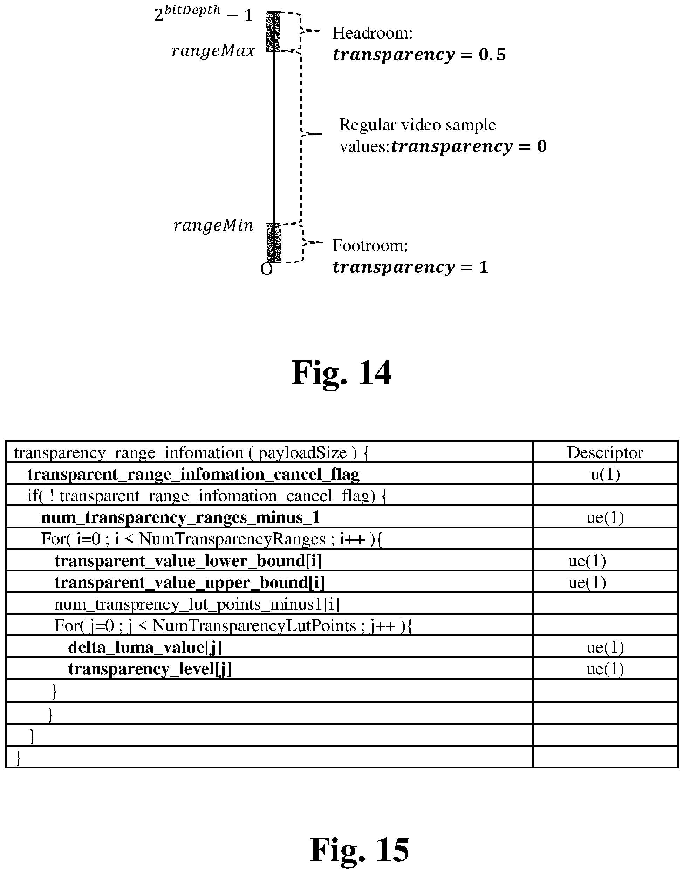

This makes particularly sense for applications where several levels of transparency are required. For example, such exemplary embodiment corresponds to the luma value sub-intervals and transparency levels of **Figure 14.** As can be seen, the footroom is used to indicate fully transparent pixels, while the headroom is used to indicate pixels with a transparency level of 0.5, assuming transparency ranges from 0 to 1. The transparency level can be seen as a transparency coefficient.

The syntax element denoted **num_transparency_ranges_minus_1** plus 1 indicates the number of samples sub-intervals used to indicate transparency levels.

The variable NumTransparencyRanges is derived as NumTransparencyRanges= **num_transparency_ranges_minus_1** + 1.

For each sub-interval of samples i, the syntax elements denoted **transparent_value_lower_bound[i]** and **transparent_value_upper_bound[i]** indicate its lower and upper bound, and **transparency_level[i]** indicates the transparency level associated to each sub-interval. This exemplary embodiment may be used for signalling the transparency information data of the first exemplary embodiment of the methods 300 and 400.

In one exemplary embodiment, illustrated on **Figure 15**, the transparency information data may be an upper bound and a lower bound of a sub-interval and a transparency Look-Up table signalled, for example in the syntax element **transparency_range_information (payloadsize).**

For each sub-interval of samples, a number (NumTransparencyLutPoints = **num_transprency_lut_points_minus1**[i]+1) of lookup table points is signalled. For each of them, a sample relative to the previous one is signalled **delta_luma_value[j]** and the transparency level of an associated pixel is also signalled **transparency_level[j].**

In a variant not shown on **Figure 15,** the value **transparency_level[j],** j>0, may be differentially coded, relative to the preceding value **transparency_level[j-**1] in signalling order. This would reduce the rate cost of the proposed metadata signalling.

In accordance with this exemplary embodiment, the syntax element **transparency_range_information (payloadsize)** may be used to signal sub-intervals and to indicate for each of them a transparency function as a look-up table. This exemplary embodiment may be used for signalling the transparency information data of the first or second exemplary embodiment of the methods 300 and 400.

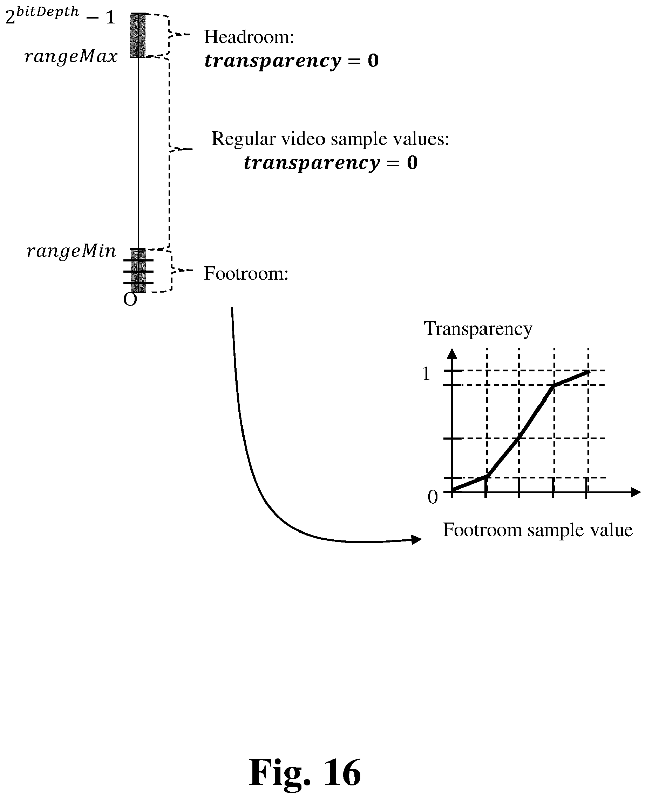

**Figure 16** shows an example of the last exemplary embodiment of the syntax element **transparency_range_information (payloadsize)** to signal transparency look-up table used to determine a transparency level from specific sample values in the footroom of the video picture VP of limited range type.

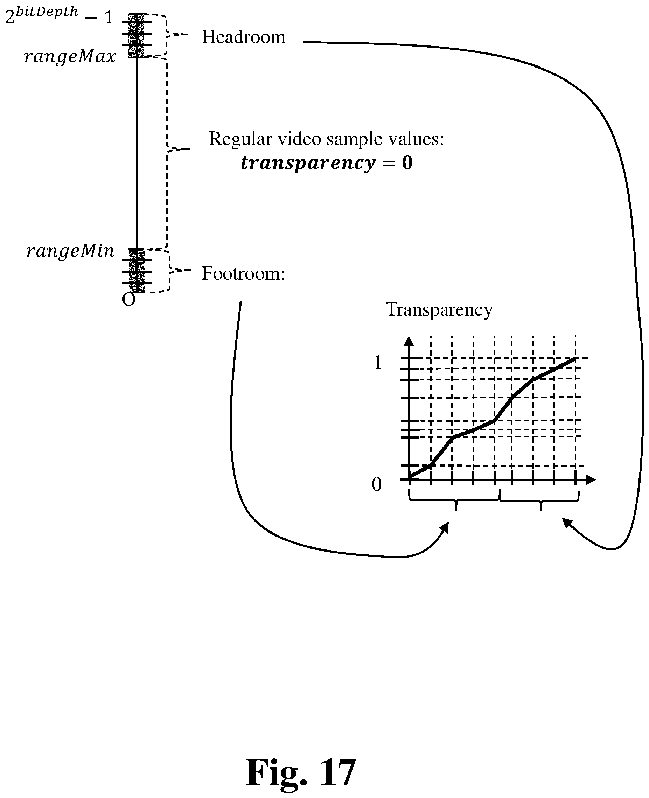

**Figure 17** shows an example of the last exemplary embodiment of the syntax element **transparency_range_information (payloadsize)** to signal two transparency look-up tables, one used to determine a transparency level from specific sample values in the footroom of the video picture VP of limited range type, and the other one to determine a transparency level from specific sample values in the headroom of the video picture VP of limited range type.

In **Figures 10-13** and **15**, the syntax element denoted **transparent_range_infomation_cancel_flag** equal to 1 indicates that the transparency range information SEI message cancels the persistence of any previous transparency range information SEI message in output order that applies to the current coded video picture. The syntax element **transparent_range_infomation_cancel_flag** equal to 0 indicates that transparency range information follows.

In one exemplary embodiment, a transparency level may be conveyed in an SEI message. This embodiment may be used by the third embodiment of the methods 300 and 400 for signaling transportation information data.

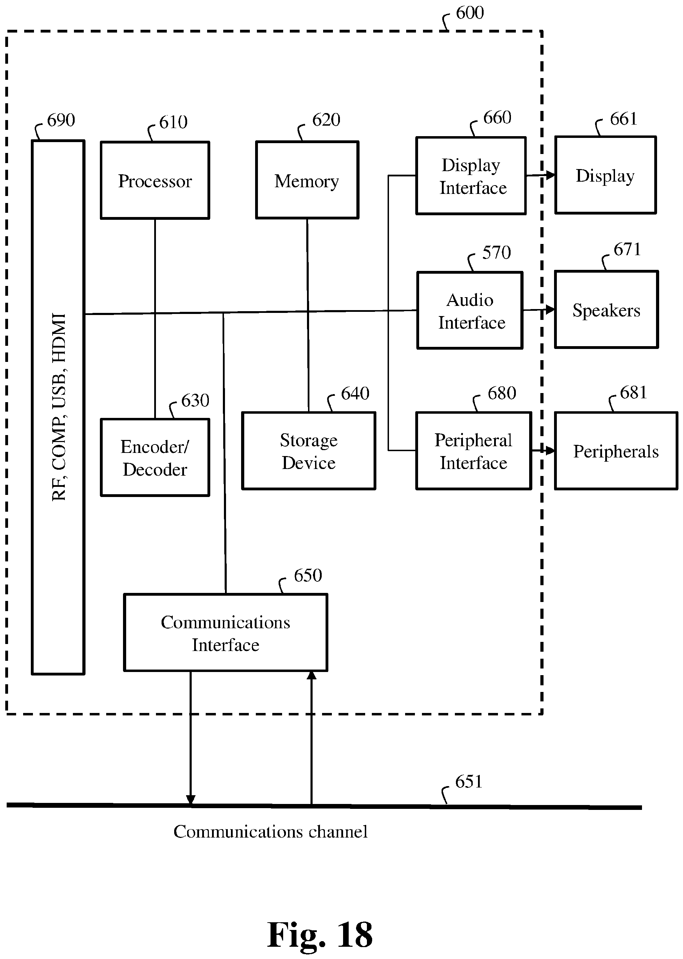

**Figure 18** shows a schematic block diagram illustrating an example of a system 600 in which various aspects and exemplary embodiments are implemented.

System 600 may be embedded as one or more devices including the various components described below. In various embodiments, system 600 may be configured to implement one or more of the aspects described in the present application.

Examples of equipment that may form all or part of the system 600 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 600, singly or in combination, may be embodied in a single integrated circuit (IC), multiple ICs, and/or discrete components. For example, in at least one embodiment, the processing and encoder/decoder elements of system 600 may be distributed across multiple ICs and/or discrete components. In various embodiments, system 600 may be communicatively coupled to other similar systems, or to other electronic devices, via, for example, a communications bus or through dedicated input and/or output ports.

System 600 may include at least one processor 610 configured to execute instructions loaded therein for implementing, for example, the various aspects described in the present application. Processor 610 may include embedded memory, input output interface, and various other circuitries as known in the art. System 600 may include at least one memory 620 (for example a volatile memory device and/or a non-volatile memory device). System 600 may include a storage device 640, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 640 may include an internal storage device, an attached storage device, and/or a network accessible storage device, as non-limiting examples.

System 600 may include an encoder/decoder module 630 configured, for example, to process data to provide encoded/decoded video picture data, and the encoder/decoder module 630 may include its own processor and memory. The encoder/decoder module 630 may represent module(s) that may be included in a device to perform the encoding and/or decoding functions. As is known, a device may include one or both encoding and decoding modules. Additionally, encoder/decoder module 630 may be implemented as a separate element of system 600 or may be incorporated within processor 610 as a combination of hardware and software as known to those skilled in the art.

Program code to be loaded onto processor 610 or encoder/decoder 630 to perform the various aspects described in the present application may be stored in storage device 640 and subsequently loaded onto memory 620 for execution by processor 610. In accordance with various embodiments, one or more of processor 610, memory 620, storage device 640, and encoder/decoder module 630 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several embodiments, memory inside of the processor 610 and/or the encoder/decoder module 630 may be used to store instructions and to provide working memory for processing that may be performed during encoding or decoding.

In other embodiments, however, a memory external to the processing device (for example, the processing device may be either the processor 610 or the encoder/decoder module 630) may be used for one or more of these functions. The external memory may be the memory 620 and/or the storage device 640, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 600 may be provided through various input devices as indicated in block 690. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various embodiments, the input devices of block 690 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 600 to other electronic devices across USB and/or HDMI connections. It is to be understood that various aspects of input processing, for example, Reed-Solomon error correction, may be implemented, for example, within a separate input processing IC or within processor 610 as necessary. Similarly, aspects of USB or HDMI interface processing may be implemented within separate interface ICs or within processor 610 as necessary. The demodulated, error corrected, and demultiplexed stream may be provided to various processing elements, including, for example, processor 610, and encoder/decoder 630 operating in combination with the memory and storage elements to process the data stream as necessary for presentation on an output device.

Various elements of system 600 may be provided within an integrated housing. Within the integrated housing, the various elements may be interconnected and transmit data therebetween using suitable connection arrangement 690, for example, an internal bus as known in the art, including the I2C bus, wiring, and printed circuit boards.

The system 600 may include communication interface 650 that enables communication with other devices via communication channel 651. The communication interface 650 may include, but is not limited to, a transceiver configured to transmit and to receive data over communication channel 651. The communication interface 650 may include, but is not limited to, a modem or network card and the communication channel 651 may be implemented, for example, within a wired and/or a wireless medium.

Data may be streamed to system 600, in various embodiments, using a Wi-Fi network such as IEEE 802.11. The Wi-Fi signal of these embodiments may be received over the communications channel 651 and the communications interface 650 which are adapted for Wi-Fi communications. The communications channel 651 of these embodiments may be typically connected to an access point or router that provides access to outside networks including the Internet for allowing streaming applications and other over-the-top communications.

Other embodiments may provide streamed data to the system 600 using a set-top box that delivers the data over the HDMI connection of the input block 690.

Still other embodiments may provide streamed data to the system 600 using the RF connection of the input block 690.

The streamed data may be used as a way for signaling information used by the system 600. The signaling information may comprise the bitstream B and/or information such a number of pixels of a video picture and/or any coding/decoding setup parameters.

It is to be appreciated that signaling may be accomplished in a variety of ways. For example, one or more syntax elements, flags, and so forth may be used to signal information to a corresponding decoder in various embodiments.

System 600 may provide an output signal to various output devices, including a display 661, speakers 671, and other peripheral devices 681. The other peripheral devices 681 may include, in various examples of embodiments, one or more of a stand-alone DVR, a disk player, a stereo system, a lighting system, and other devices that provide a function based on the output of system 600.

In various embodiments, control signals may be communicated between the system 600 and the display 661, speakers 671, or other peripheral devices 681 using signaling such as AV.Link (Audio/Video Link), CEC (Consumer Electronics Control), or other communications protocols that enable device-to-device control with or without user intervention.

The output devices may be communicatively coupled to system 600 via dedicated connections through respective interfaces 660, 670, and 680.

Alternatively, the output devices may be connected to system 600 using the communications channel 651 via the communications interface 650. The display 661 and speakers 671 may be integrated in a single unit with the other components of system 600 in an electronic device such as, for example, a television.

In various embodiments, the display interface 660 may include a display driver, such as, for example, a timing controller (T Con) chip.

The display 661 and speaker 671 may alternatively be separate from one or more of the other components, for example, if the RF portion of input 690 is part of a separate set-top box. In various embodiments in which the display 661 and speakers 671 may be external components, the output signal may be provided via dedicated output connections, including, for example, HDMI ports, USB ports, or COMP outputs.

In **Figures 1-18**, various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 610 or by hardware, or by a combination of hardware and software. As a non-limiting example, the embodiments may be also implemented by one or more integrated circuits. The memory 620 may be of any type appropriate to the technical environment and may be implemented using any appropriate data storage technology, such as optical memory devices, magnetic memory devices, semiconductor-based memory devices, fixed memory, and removable memory, as non-limiting examples. The processor 610 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. -For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain. In various embodiments, such processes include one or more of the processes typically performed by a decoder. In various embodiments, such processes also, or alternatively, include processes performed by a decoder of various implementations described in the present application, for example,

As further examples, in one embodiment "decoding" may refer only to de-quantizing, in one embodiment "decoding" may refer to entropy decoding, in another embodiment "decoding" may refer only to differential decoding, and in another embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various embodiments, such processes include one or more of the processes typically performed by an encoder. In various embodiments, such processes also, or alternatively, include processes performed by an encoder of various implementations described in this application.

As further examples, in one embodiment "encoding" may refer only to quantizing, in one embodiment "encoding" may refer only to entropy encoding, in another embodiment "encoding" may refer only to differential encoding, and in another embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain embodiments the encoder signals a particular information such as coding parameter or encoded video picture data. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding a video picture into a bitstream of encoded video picture data, the video picture comprising at least one component of samples representative of pixel values of a screen, wherein the method comprises:

    - obtaining (320), from a transparency map, a modified video picture by assigning specific values (SV) to samples of one component (C) associated with transparent pixels, said specific values (SV) are different of sample values of said component (C) associated with non-transparent pixels ; and
    - encoding (330) the modified video picture.

2. A method for decoding a video picture from a bitstream of encoded video picture data, the video picture comprising at least one component of samples representative of pixel values of a screen, wherein the method comprises:

    - obtaining (410) decoded video picture data representative of samples associated with pixels by decoding the bitstream of encoded video picture data; and
    - when a sample of one component associated with a pixel equals to a specific value (SV), adjusting (420) each sample of each component associated with said pixel based on transparency information data.

3. The method of claim 1 or 2, wherein when the video picture is represented in a limited range of values, specific values (SV) are outside said limited range of values.

4. The method of claim 3, wherein a foot-room and/or a headroom of the limited range of values is used to indicate at least one of the following information:

    - a transparency pixel presence data;
    - a transparency value upper bound of a sub-interval of sample values associated with transparent pixels;
    - a transparency value lower bound of a sub-interval of sample values associated with transparent pixels;
    - at least one sub-interval of samples values used to signal information relative to transparent pixels;
    - intervals of values used to indicate entries of a transparency look-up table ;
    - a transparency level;

5. The method of one of claims 1 to 2, wherein a specific sample (SV) is obtained by modifying at least one last significant bit (LSB) of a value of a sample associated with a transparent pixel.

6. The method of one of claims 1 to 2, wherein a specific value (SV) assigned to a sample associated with a transparent pixel has a given parity, said specific value being obtained from the value of said sample.

7. The method of one of claims 1 to 6, wherein the method further comprises signaling into the bitstream transparency information data indicating a meaning of the specific values (SV) assigned to samples of one component of either the modified video picture or the decoded video picture.

8. The method of claim 7, wherein the transparency information data indicates at least one of the following information:

    - a presence of at least one transparent pixel in a video picture or in a video;
    - a transparency value upper bound of a sub-interval of sample values associated with transparent pixels;
    - a transparency value lower bound of a sub-interval of sample values associated with transparent pixels;
    - at least one sub-interval of samples values used to signal information relative to transparent pixels;
    - intervals of values used to indicate entries of a transparency look-up table ;
    - a transparency level.

9. The method of one of claims 1, 3 to 8, wherein the video picture is partitioned to maximize a number of blocks of samples associated with only either transparent pixels or only non-transparent pixels

10. The method of one of claims 1, 3 to 9, wherein a same specific value (SV) is assigned to all samples of all blocks of samples associated with transparent pixels.

11. A bitstream, formatted to include encoded video picture data and transparency information data obtained from a method of one of claims 1, 3 to 10.

**12.** An apparatus for encoding a video picture into a bitstream of encoded video picture data, the apparatus comprising means for performing one of the method claimed in any one of claims 1, 3 to 10.

**13.** An apparatus for video decoding a video picture from a bitstream of encoded video picture data, the apparatus comprising for performing one of the method claimed in any one of claims 2 to 10.

**14.** A computer program product including instructions which, when the program is executed by one or more processors, causes the one or more processors to carry out a method claimed in any one of claims 1 to 10.

**15.** A non-transitory storage medium carrying instructions of program code for executing a method claimed in any one of claims 1 to 10.

**Fig. 1**

200

210  220  230  240

250

260

DPB

270

**Fig. 2**

**Fig. 3**

**Fig. 4**

**Fig. 5**

500

$$\text{cost } minRD_{cost}$$

mode

no

yes

$$R(CU, mode)$$  $$D_{non-transp}(CU, mode)$$

$$RD_{cost}(CU, mode)$$

higher

$$\text{cost } minRD_{cost}$$

lower

## Fig. 6

transparent

Non-transparent

# Fig. 7

| nal_unit( NumBytesInNalUnit ) { | Descriptor |
|---|---|
| nal_unit_header( ) | |
| NumBytesInRbsp = 0 | |
| for( i = 2; i < NumBytesInNalUnit; i++ ) | |
| if( i + 2 < NumBytesInNalUnit && next_bits( 24 ) = = 0x000003 ) { | |
| **rbsp_byte[ NumBytesInRbsp++ ]** | b(8) |
| **rbsp_byte[ NumBytesInRbsp++ ]** | b(8) |
| i += 2 | |
| **emulation_prevention_three_byte** /* equal to 0x03 */ | f(8) |
| } else | |
| **rbsp_byte[ NumBytesInRbsp++ ]** | b(8) |
| } | |

# Fig. 8

| sei_payload( payloadType, payloadSize ) { | Descriptor |
|---|---|
| if( nal_unit_type = = PREFIX_SEI_NUT ) | |
| if( payloadType = = 0 ) | |
| buffering_period( payloadSize ) | |
| else if( payloadType = = 1 ) | |
| pic_timing( payloadSize ) | |
| ... | |
| else if( payloadType = = 133 ) | |
| scalable_nesting( payloadSize ) | |
| else if( payloadType = = 134 ) | |
| transparency_range_information ( payloadSize ) | |
| else /* Specified in Rec. ITU-T H.274 \| ISO/IEC 23002-7 */ | |
| reserved_message( payloadSize ) | |
| ... | |
| } | |

# Fig. 9

| transparency_range_infomation ( payloadSize ) { | Descriptor |
|---|---|
| **transparent_range_infomation_cancel_flag** | u(1) |
| if( ! transparent_range_infomation_cancel_flag) { | |
| **transparent_value_zero_flag** | u(1) |
| } | |
| } | |

# Fig. 10

| transparency_range_infomation ( payloadSize ) { | Descriptor |
|---|---|
| **transparent_range_infomation_cancel_flag** | u(1) |
| if( ! transparent_range_infomation_cancel_flag) { | |
| **transparent_value_upper_bound** | ue(1) |
| } | |
| } | |

# Fig. 11

| transparency_range_infomation ( payloadSize ) { | Descriptor |
|---|---|
| **transparent_range_infomation_cancel_flag** | u(1) |
| if( ! transparent_range_infomation_cancel_flag) { | |
| **transparent_value_lower_bound** | ue(1) |
| **transparent_value_upper_bound** | ue(1) |
| } | |
| } | |

# Fig. 12

| **transparency_range_infomation ( payloadSize ) {** | Descriptor |
|---|---|
| transparent_range_infomation_cancel_flag | u(1) |
| if( ! transparent_range_infomation_cancel_flag) { | |
| num_transparency_ranges_minus_1 | ue(1) |
| For( i=0 ; i < NumTransparencyRanges ; i++ ){ | |
| transparent_value_lower_bound[i] | ue(1) |
| transparent_value_upper_bound[i] | ue(1) |
| transparent_level[i] | |
| } | |
| } | |
| } | |

# Fig. 13

$2^{bitDepth} - 1$

rangeMax

Headroom:
***transparency* = 0.5**

Regular video sample
values:***transparency* = 0**

rangeMin

Footroom:
***transparency* = 1**

0

# Fig. 14

| transparency_range_infomation ( payloadSize ) { | Descriptor |
|---|---|
| **transparent_range_infomation_cancel_flag** | u(1) |
| if( ! transparent_range_infomation_cancel_flag) { | |
| **num_transparency_ranges_minus_1** | ue(1) |
| For( i=0 ; i < NumTransparencyRanges ; i++ ){ | |
| **transparent_value_lower_bound[i]** | ue(1) |
| **transparent_value_upper_bound[i]** | ue(1) |
| num_transprency_lut_points_minus1[i] | |
| For( j=0 ; j < NumTransparencyLutPoints ; j++ ){ | |
| **delta_luma_value[j]** | ue(1) |
| **transparency_level[j]** | ue(1) |
| } | |
| } | |
| } | |
| } | |

# Fig. 15

$2^{bitDepth} - 1$

$rangeMax$

Headroom:
**transparency = 0**

Regular video sample values:
**transparency = 0**

$rangeMin$

Footroom:

0

Transparency

1

0

Footroom sample value

**Fig. 16**

$2^{bitDepth} - 1$

*rangeMax*

Headroom

Regular video sample values:
**transparency = 0**

*rangeMin*

Footroom:

0

Transparency

1

0

**Fig. 17**

**Fig. 18**

Europäisches
Patentamt

European
Patent Office

Office européen
des brevets

**EUROPEAN SEARCH REPORT**

Application Number

EP 22 30 5169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "Annex L - Supplemental Enhancement Information Specification", ITU-T RECOMMENDATION H.263, XX, XX, 1 February 1998 (1998-02-01), pages 88-94, XP002183259, * sections L.1, L.14 * | 1-4, 10-15 | INV. H04N19/119 H04N19/176 H04N19/46 H04N19/70 |
| X | Jack Keith: "Luma and Chroma Keying" In: "Video Demystified: A Handbook for the Digital Engineer", 1 January 2007 (2007-01-01), Elsevier, XP055944324, ISBN: 978-0-7506-8395-1 pages 211-222, Retrieved from the Internet: URL:http://ebookcentral.proquest.com/lib/epo-ebooks/detail.action?docID=405645> | 1-4, 10-15 | |
| Y | * section "Luma and Chroma Keying" * & Jack Keith: "H.263" In: "Video Demystified: A Handbook for the Digital Engineer", 1 January 2007 (2007-01-01), Elsevier, XP055944498, ISBN: 978-0-7506-8395-1 vol. 263, pages 481-513, * page 481 - page 483 * | 5,6 | |

-/--

TECHNICAL FIELDS
SEARCHED (IPC)

H04N

The present search report has been drawn up for all claims

| Place of search | Date of completion of the search | Examiner |
|---|---|---|
| Munich | 21 July 2022 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 22 30 5169

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Gary Sullivan ET AL: "Recommended 8-Bit YUV Formats for Video Rendering (Windows)", , 30 November 2002 (2002-11-30), XP055121098, Retrieved from the Internet: URL:http://msdn.microsoft.com/de-de/library/windows/desktop/dd206750(v=vs.85).aspx [retrieved on 2014-06-02] * "Other YUV Formats"; page 8 * ----- | 5,6 | |
| A | JP 4 016165 B2 (SONY CORP) 5 December 2007 (2007-12-05) * paragraph [0014] * * paragraph [0022] * ----- | 5,6 | |

**TECHNICAL FIELDS SEARCHED (IPC)**

The present search report has been drawn up for all claims

| Place of search | Date of completion of the search | Examiner |
|---|---|---|
| Munich | 21 July 2022 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 22 30 5169**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

**see sheet B**

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

**1-6, 10-15**

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

## LACK OF UNITY OF INVENTION
## SHEET B

Application Number

EP 22 30 5169

The Search Division considers that the present European patent application does not comply with the requirements of unity of invention and relates to several inventions or groups of inventions, namely:

1. claims: 1-6, 10-15

   Transparency data embedded in the LSB of the component values
   ---

2. claims: 7, 8

   Signaling parameters for interpretation of the transparency data
   ---

3. claim: 9

   Block partitioning for maximizing number of uniform transparent or non-transparent blocks
   ---

## ANNEX TO THE EUROPEAN SEARCH REPORT
## ON EUROPEAN PATENT APPLICATION NO.

EP 22 30 5169

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2022

| Patent document cited in search report | | Publication date | Patent family member(s) | | Publication date |
|---|---|---|---|---|---|
| JP 4016165 | B2 | 05-12-2007 | JP | 4016165 B2 | 05-12-2007 |
| | | | JP | 2000175018 A | 23-06-2000 |

For more details about this annex : see Official Journal of the European Patent Office, No. 12/82

**REFERENCES CITED IN THE DESCRIPTION**

**Patent documents cited in the description**

- WO 2105618 A

- US 10204596 B